# EUROPÄISCHE PATENTANMELDUNG

(11) **EP 1 832 170 A2**
(43) Veröffentlichungstag der Anmeldung: **12.09.2007**
(21) Anmeldenummer: 07004632.1
(22) Anmeldetag: 07.03.2007
(51) Int. Cl.: A21C 9/08, A21C 11/10

(54) **Vorrichtung zum Schneiden und Separieren eines kontinuierlich oder getaktet geführten Teigbandes**

(30) Priorität: 09.03.2006 DE 102006011005; 09.01.2007 DE 102007001384
(71) Anmelder: PCM Krause GmbH, 33649 Bielefeld (DE)
(72) Erfinder: Geisler, Siegfried, 33818 Leopoldshöhe (DE)
(74) Vertreter: Hofmann, Matthias

(57) **Zusammenfassung**

Die Erfindung betrifft eine Vorrichtung zum Schneiden und Separieren von Teiglingen in beliebige geometrische Formen aus einem kontinuierlich oder getaktet geführten Teigband, umfassend ein Transportband (4) und einen Werkzeugbalken (6) mit einer Menge von messerartigen Schneidwerkzeugen (12), welche mittels Hubantrieb (10) zur Ausführung von Schneidbewegungen auf das auf dem Transportband (4) befindliche Teigband zuführbar und von diesem entfernbar sind. Die Erfindung ist gekennzeichnet durch eine bezogen auf die Transport- und Teigband-Bewegungsrichtung vorgesehene Längsführung des Werkzeugbalkens (6) mit Linearantrieb (11), um im Schneidzustand oder nach ausgeführtem Schneiden das Separieren der geschnittenen Reihe vom Teigband zu bewirken, wobei hierfür die Schneideinheit (5) mit Werkzeugbalken (6) in Durchlaufrichtung des Teigbands um einen vorgegebenen Betrag unter Mitnahme der geschnittenen Teiglingreihe verfahren wird, sowie mit einem Drehantrieb (7) zum Revolvieren des Messerbalkens (8), wobei der Messerbalken (8) mehrere Messerplatten (9) aufweist, auf denen jeweils unterschiedliche Schneidwerkzeuge (12) oder Schneidwerkzeug-Kombinationen befestigbar sind.

## Beschreibung

Die Erfindung betrifft eine Vorrichtung zum Schneiden und Separieren von Teiglingen in beliebige geometrische Formen aus einem kontinuierlich oder getaktet geführten Teigband, umfassend ein Transportband und einen Werkzeugbalken mit einer Menge von messerartigen Schneidwerkzeugen, welche mittels Hubantrieb zur Ausführung von Schneidbewegungen auf das auf dem Transportband befindliche Teigband zuführbar und von diesem entfernbar sind, gemäß Oberbegriff des Patentanspruchs 1.

Im Rahmen der Fertigungsrationalisierung im Bereich industrieller Backtechnik besteht das Erfordernis, auch komplizierte Backwaren, insbesondere mit traditionellem Ursprung oder Hintergrund, produktiv fertigen zu können.

Üblicherweise erfolgt nach der Teigbandformung ein Längs- und Querschneiden der Teiglinge mit späterem Vereinzeln, Spreizen, Drehen und Zusammenführen, so dass - wenn notwendig - ein Wickeln des Teiglings sich anschließen kann, wobei in einem letzten Schritt ein Ausrichten der Teiglinge zur Übergabe in Tröge eines Gärschranks vorgenommen wird und das Ausgaren bzw. das spätere Ausbacken erfolgt.

Die Vorrichtungen zum Längs- und Querschneiden sowie zum Trennen, d.h. Vereinzeln der Teiglinge, müssen einerseits leicht an verschiedene Teiglingformen anpassbar sowie andererseits wenig aufwendig zu reinigen sein. Auch gilt es bei einer anzustrebenden kontinuierlichen Fertigungsabfolge Unterbrechungen der Transportbewegung des Transportbands, auf dem sich die Teiglinge befinden, zu vermeiden.

Als besonders problematisch stellten sich bisher die Stationen zum Vereinzeln, Spreizen und Drehen der Teiglinge heraus, da in vielen Fällen die Teiglinge nicht nur durch einen einfachen Trennschnitt aus dem Teigband zu gewinnen sind, sondern vielmehr noch eine Lageveränderung der unterschiedliche geometrische Formen aufweisenden Teiglinge notwendig ist. Letztendlich müssen die Teiglinge insbesondere zum Zweck des Wickelns sich in einer exakten Position auf dem Transportband befinden, um die notwendige Reproduzierbarkeit für die Fertigprodukte, wie Salzstangen, Kornstangen, Weckerl, Fleckerl, Riegel oder Ähnliches zu gewährleisten.

Aus dem Vorgenannten ist es daher Aufgabe der Erfindung, eine weiterentwickelte Vorrichtung zum Schneiden und Separieren von Teiglingen in beliebige geometrische Formen aus einem kontinuierlich oder getaktet geführten Teigband anzugeben, wobei die Vorrichtung sehr hohe Taktzeiten und damit eine optimale Produktausbeute gewährleistet. Insbesondere gilt es zu verhindern, dass der Teigling beim Hochfahren der Schneidmesser mitgezogen wird und mithin nicht auf dem Transportband liegen bleibt. Weiterhin sollen Doppelschnitte vermieden werden. Die gegebenenfalls notwendig werdende Dreh- und Spreizeinrichtung soll für einen einfachen Werkzeugwechsel und für eine Reinigung gut zugänglich sowie so ausgeführt werden, dass nur minimale sekundäre Massen mit Ausnahme des Teiglings selbst der notwendigen Hubbewegung unterliegen, um ein beschädigungsfreies Drehen oder Verschieben der Teiglinge sicherzustellen.

Letztendlich ist zu beachten, dass das Teigband stark bemehlt ist, was zu einer erhöhten Mehlstaubbelastung für alle mechanischen Elemente insbesondere in dem Bereich führt, wo die Teiglinge bezogen auf das Transportband einer Relativbewegung unterliegen.

Die Lösung der Aufgabe erfolgt durch eine Vorrichtung gemäß der Merkmalskombination nach Patentanspruch 1, wobei die Unteransprüche mindestens zweckmäßige Ausgestaltungen und Weiterbildungen darstellen.

Bei der erfindungsgemäßen Vorrichtung zum Schneiden und Separieren von Teiglingen in beliebige geometrische Formen aus einem kontinuierlich oder getaktet geführten Teigband wird von einem Werkzeugbalken mit einer Menge von messerartigen Schneidwerkzeugen, welche mittels Hubantrieb zur Ausführung von Schneidbewegungen auf das auf einem Transportband befindliche Teigband zuführbar und von diesem entfernbar sind, ausgegangen.

Erfindungsgemäß ist eine, bezogen auf die Transport- und Teigbahn-Bewegungsrichtung, Längsführung des Werkzeugbalkens mit Linearantrieb vorgesehen, um im Schneidzustand oder nach ausgeführtem Schneiden das Separieren der geschnittenen Teiglingreihe vom Teigband zu bewirken, wobei hierfür die Schneideinheit mit Werkzeugbalken in Durchlaufrichtung des Teigbands über einen vorgegebenen Betrag unter Mitnahme der geschnittenen Teiglingreihe verfahren wird.

Darüber hinaus ist der Messerbalken mit einem Drehantrieb zum Revolvieren versehen, wobei der Messerbalken mehrere Messerplatten aufweist, auf denen jeweils unterschiedliche Schneidwerkzeuge oder Schneidwerkzeug-Kombinationen anordenbar sind.

In einer bevorzugten Ausgestaltung der Erfindung besitzt der Werkzeugbalken einen vieleckigen, z. B. quadratischen Querschnitt, wobei auf jeder der Seitenflächen eine Messerplatte in austauschbarer Weise angeordnet ist. Der Revolverdrehantrieb steht mit einer in Längsrichtung des Werkzeugbalkens in seinem Inneren verlaufenden Drehachse in Wirkverbindung.

Weiterhin ist erfindungsgemäß in Durchlaufrichtung des Teigbands mindestens eine quer zum Teigband bzw. zum Transportband verschiebliche Dreh-Spreiz-Einrichtung vorgesehen.

Die Dreh-Spreiz-Einrichtung umfasst mindestens einen, bevorzugt mehrere Arbeitsköpfe, welcher bzw. welche von einem Linearantrieb in Querrichtung bezogen auf das Teigband verfahrbar sind.

Jeder der Arbeitsköpfe weist einen Drehantrieb auf, dessen hohlzylindrische Drehantriebsachse mit einer Aufnahmeplatte in Verbindung steht.

An der Aufnahmeplatte sind Bolzen angeordnet, um eine im Wesentlichen senkrecht zur Teigbahn bewegliche Nadelplatte zum Fixieren der Teiglinge zu führen.
Weiterhin ist an den Bolzenenden eine Abstreiferplatte befestigt, welche der Anordnung der Nadeln auf der Nadelplatte entsprechende Durchtrittsöffnungen für die Nadeln aufweist.

In der hohlzylindrischen Drehantriebsachse ist ein Hubzylinder befindlich, dessen Zylinderstange mit der Nadelplatte in Verbindung steht. Durch diese Ausgestaltung muss beim Anheben eines Teiglings nur die Nadelplatte mit Nadeln bewegt werden, so dass der Hubzylinder nur für diese recht geringen Massen und damit in kostengünstiger Weise zu dimensionieren ist. Die Baueinheit aus Aufnahmeplatte, Nadelplatte und Abstreifplatte ist leicht vom Drehantrieb und Hubzylinder lösbar, so dass die Anpassung an verschiedene Teiglingformen mit minimalen Produktionsunterbrechungen vornehmbar ist.

Die Dreh-Spreiz-Einrichtung ist auf einer zusätzlichen, in Teigbandlaufrichtung orientierten Linearführung angeordnet, um diese Einrichtung aus einer dem Werkzeugbalken nahen Arbeitsposition in eine balkenferne Wartungs- und/oder Reinigungsposition zu bewegen.

Sowohl der Arbeitskopf als auch der Linearantrieb in Querrichtung ist staubdicht, insbesondere mehlstaubdicht gekapselt.

Die Kapselung des Querrichtungs-Linearantriebs der Dreh-Spreiz-Einrichtung umfasst teilweise überlappende Bürstenstreifen, welche einen Durchtrittsspalt verschließen, wobei im Bereich des Durchtrittsspalts mindestens ein Koppelflansch befindlich ist, welcher den jeweiligen Arbeitskopf trägt und wobei der Koppelflansch mit dem Linearantrieb verbunden ist, der sich im Inneren eines ansonsten geschlossenen Gehäuses befindet.

Mindestens im Abschnitt der mittels Messerbalken und Messerplatte auszuführenden Schneidbewegungen unterhalb des Transportbands, welches das Teigband bzw. die Teiglinge trägt, befindet sich ein bevorzugt rollengeführtes, umlaufendes Endlosband als Schneiduntenlage.

Das Endlosband steht teilweise mit der Unterseite des Transportbands in Kontakt und wird bei Bewegung des Transportbands mitgeschleppt, so dass sich ein separater Antrieb für das Endlosband erübrigt.

Durch das vorgesehene Endlosband erfolgt das Schneiden der Teiglinge nahezu immer in einer geänderten, neutralen Position mit hoher Schnittqualität. Dadurch, dass nicht gegen eine starre Unterplatte geschnitten wird, unterliegen darüber hinaus die Schneidmesser der Messerplatten nur einem geringen Verschleiß.

Beim Querschneiden mit der erfindungsgemäßen Vorrichtung werden bereits vorab über Schneidwalzen längsgeteilte Teigbandstreifen quer zur Vorschubrichtung getrennt. Die Form des jeweiligen Teiglings wird durch die geometrische Form und die Anordnung der einzelnen Messer auf den Messerplatten bestimmt.

Die Teigstreifen werden vollständig getrennt und sind damit für nachfolgende Spreizwerkzeuge sicher erfassbar. Dadurch, dass die einzelnen Messer auf einer geraden Messerplatte angeordnet sind, ergibt sich eine exakte Schneidausrichtung in gleicher Höhe.

Der Querschnitt wird nach dem Prinzip des Revolverschneidens realisiert, wobei der Schneidbalken bei der Ausführungsform mit viereckigem Querschnitt bis zu vier Messerplatten mit unterschiedlicher Messerbesetzung aufnehmen kann. Vor dem jeweiligen Schnitt wird der Schneidbalken / Messerbalken automatisch in die notwendige Position gedreht, so dass sich das zugeordnete Messer in Arbeitsposition über dem Teigband befindet. Zum Schneiden wird dann der gesamte Werkzeugbalken mit der entsprechenden Messerplatte elektromechanisch über einen Kurvenscheibenantrieb nach unten in Richtung Teigband bewegt. Kurz vor dem Hochfahren führt der gesamte Messerbalken, mit den Messern im Eingriff bezogen auf die Teiglinge, eine kurze Vorwärtsbewegung in Laufrichtung aus. Es schieben also die Messer den geschnittenen Teigling um eine Strecke von z. B. wenigen Millimetern nach vom in Teigbandlaufrichtung.

Dadurch, dass immer nur eine Seite geschnitten wird und nicht die komplette Form im Sinne einer Ausstanzung, reduziert sich die Gefahr des Anklebens des Teiglings beim Hochfahren der Messer.

Ausgestaltend kann an jedem Messer eine Abstreifbrille angebracht werden, die ein Hochziehen des Teiglings vermeidet.

Die Länge der Teiglinge wird automatisch durch den zeitlichen Abstand zwischen zwei Schnitten bestimmt, wobei hierdurch das Gewicht der Teiglinge exakt eingestellt werden kann. Bei rechteckigen Teiglingen kommt bei jedem Schnitt dieselbe Messerplatte zum Einsatz.

Bei nicht rechteckigen Teiglingen, wie Teiglingen in Form von Dreiecken oder Trapezen wird mit zwei Messerplatten geschnitten, auf denen die Messer entsprechend angeordnet sind. Zwischen zwei Schnitten wird dann der Schneidbalken um z. B. 90° gedreht, so dass die entsprechenden Messer auf den jeweiligen Messerbalken zum Eingriff kommen. Doppelschnitte sind hierdurch ausgeschlossen, da die Messer für jeden Schnitt nu ein einziges Mal sich im Eingriff mit dem Teigling befinden.

Dadurch, dass der Schneid- bzw. Messerbalken z. B. bis zu vier Messerplatten mit verschiedenen Messern aufnehmen kann, entfällt eine manuelle Umrüstung der Messer bei einem Wechsel zwischen zwei Produkten unterschiedlicher Form. Ist es notwendig, auf eine dritte Form zu wechseln, ist nur die jeweilige Messerplatte auszutauschen.

Die Teiglinge müssen beim Trennen gerade auf dem Transportband liegen bleiben und sollen sich nicht an der Vorderkante stauen oder sich aufwölben. Um dies zu verhindern, wird die Vorderkante beim vorangegangenen Schnitt vom hochfahrenden Quermesser leicht angehoben, so dass die entsprechende Kante nicht hängen bleiben kann.

Zu Reinigungszwecken können die Messerplatten leicht entnommen werden. Der Messerbalken kann in seine höchste Position gefahren werden, so dass das Unterband bzw. Transportband leicht zugänglich ist.

Die Erfindung soll nachstehend anhand eines Ausführungsbeispiels sowie unter Zuhilfenahme von Figuren näher erläutert werden.

Hierbei zeigen:
- Fig. 1 und 2: perspektivische Darstellungen der erfindungsgemäßen Vorrichtung zum Schneiden und Separieren mit erkennbarem Transportband sowie Messerbalken und Dreh-Spreiz-Einrichtung;
- Fig. 3: ein Detail der Vorrichtung mit Werkzeugbalken und erkennbarer Antriebsanordnung zum Verfahren der Schneideinheit, wobei neben dem Transportband auch das als Endlosband ausgeführte Unterband erkennbar ist;
- Fig. 4: eine Darstellung ähnlich derjenigen nach Fig. 3, jedoch ohne Transportband;
- Fig. 5: eine Darstellung ähnlich derjenigen nach Fig. 4, jedoch mit weggebrochenem Tragrahmen der Schneideinheit zur besseren Erkennbarkeit des Hubantriebs zur Ausführung der Schneidbewegungen sowie der Lage von Endlosband und Transportband;
- Fig. 6 und 7: verschiedene Darstellungen der Schneideinheit mit Werkzeugbalken, wobei Fig. 7 die bereits befestigten Messerplatten erkennen lässt;
- Fig. 8: eine Detaildarstellung der Dreh-Spreiz-Einrichtung mit einem angeflanschten Arbeitskopf;
- Fig. 9: ein Detail der Darstellung nach Fig. 8 mit erkennbarer Bürstenabdichtung zwischen Querrichtungs-Linearantrieb und Arbeitskopf;
- Fig. 10: eine Darstellung eines Arbeitskopfes (geöffnet) mit Drehantrieb, Hubzylinder, Arbeitsplatte, Nadelplatte und Abstreiferplatte im Zustand eingefahrener Nadeln;
- Fig. 11: eine Darstellung ähnlich derjenigen nach Fig. 10, jedoch im Zustand Nadelplatte mit ausgefahrenen Nadeln zur Aufnahme eines Teiglings;
- Fig. 12: eine Prinzipdarstellung des Schneid- und Separierungsvorgangs eines Teigbands und
- Fig. 13: eine tabellarische Erläuterung des Ablaufs beim Querschneiden von nicht rechteckigen Formen.

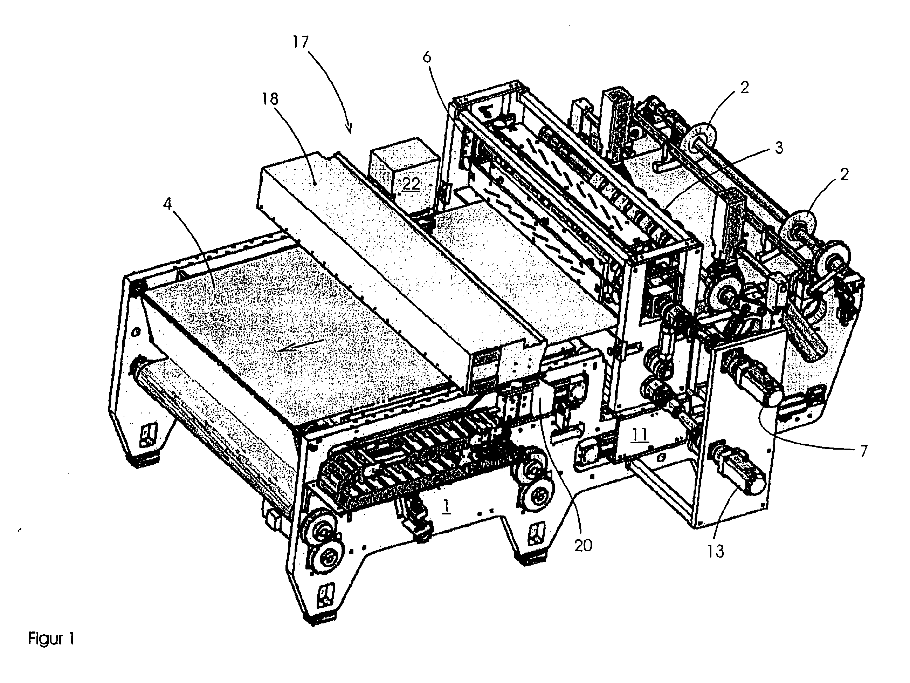

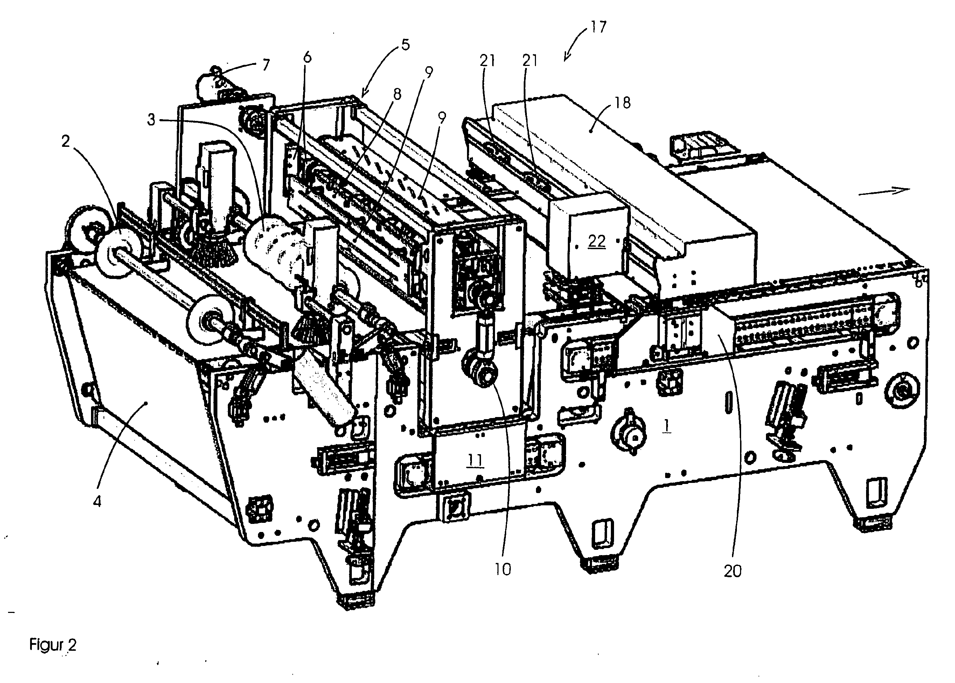

Die Vorrichtung zum Schneiden und Separieren von Teiglingen gemäß den Fig. 1 und 2 weist zunächst ein rahmenartiges Gestell 1 auf, welches alle notwendigen mechanischen Elemente einschließlich Antriebe, Führungswalzen und dergleichen aufnimmt.

Die Teigband-Bewegungsrichtung ist mit der Pfeildarstellung symbolisiert.

Mit Hilfe von rotierenden Messern 2 und 3 wird das auf dem Transportband 4 befindliche Teigband (nicht gezeigt) zunächst längsseitig gesäumt und in Längsstreifen getrennt.

Das Teigband gelangt dann in den Bereich unterhalb der Schneideinheit 5. Die rahmenförmig ausgeführte Schneideinheit 5 weist einen Werkzeugbalken 6 auf, welcher revolvierbar, d.h. drehbar, ist und hierfür einen Antrieb 7 besitzt.

Auf dem Werkzeugbalken 6 befinden sich Messerbalken 8 mit Messerplatten 9.

Mittels eines Hubantriebs 10 kann der gesamte Werkzeugbalken 6 mit Messerbalken und Messerplatten einerseits in eine Ruheposition angehoben und andererseits in eine Schneidposition abgesenkt, d.h. zum Ausführen der notwendigen Schneidbewegungen bewegt werden.

Die Schneideinheit 5 mit Werkzeugbalken 6 ist in Durchlaufrichtung des Teigbands um einen vorgegebenen Betrag unter Mitnahme der geschnittenen Teiglingreihe verfahrbar, wobei hierfür eine Längsführung mit einem Linearantrieb 11 vorgesehen ist.

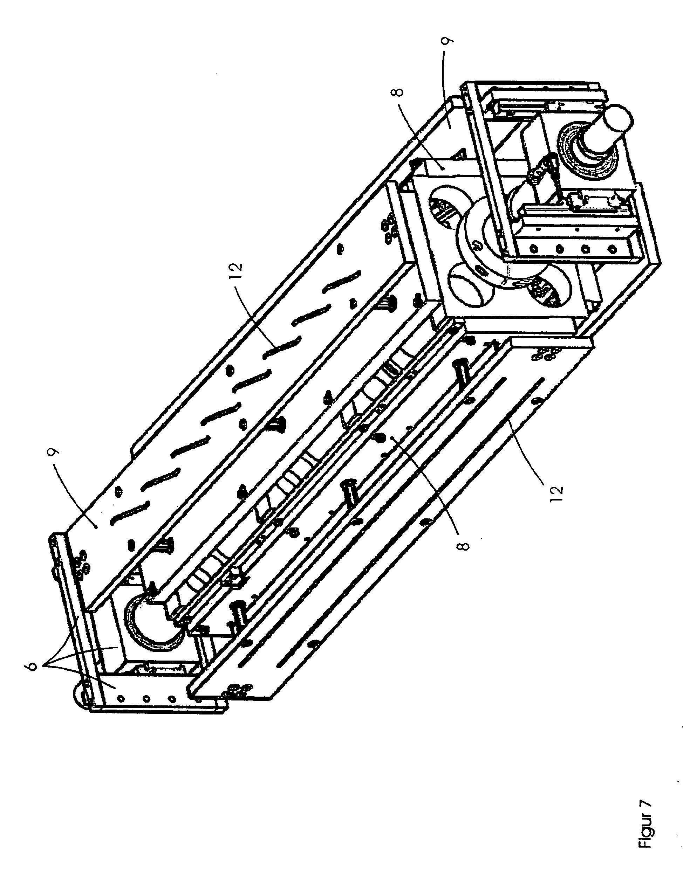

Die Schneidwerkzeuge 12, die auf den Messerplatten 9 angeordnet sind (siehe z. B. Fig. 7), können eine unterschiedliche Gestalt aufweisen, und zwar je nach notwendiger Endform des herzustellenden Teiglings bzw. Backwerks.

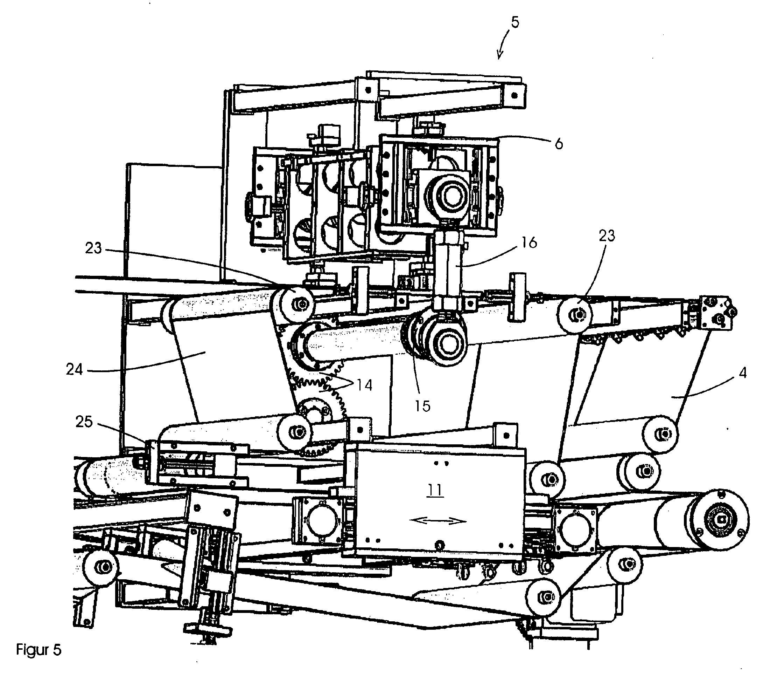

Mit Hilfe des in Fig. 1 erkennbaren weiteren Drehantriebs 13 wird mit Hilfe eines Getriebes 14 und eines Exzenters 15 (siehe Fig. 5) der Schneidhub erzeugt, der dann auf den Werkzeugbalken 6 mit Hilfe einer Koppelstange 16 übertragen wird.

Der Schneideinheit 5 nachgeordnet ist eine Dreh-Spreiz-Einrichtung 17.

Diese Dreh-Spreiz-Einrichtung 17 umfasst eine Querrichtungs-Linearantriebsanordnung bzw. einen Linearantrieb, und zwar innerhalb eines gekapselten Gehäuses 18. Weiterhin ist die Dreh-Spreiz-Einrichtung 17 auf einer zusätzlichen, in Teigbandrichtung verlaufenden Linearführung 20 angeordnet, um die Dreh-Spreiz-Einrichtung 17 aus einer dem Werkzeugbalken 6 nahen Arbeitsposition in eine balkenferne Wartungsposition bewegen zu können.

Im Bereich eines Durchtrittsspalts des gekapselten Gehäuses 18 sind Koppelflansche 21 befindlich, die mit der im Inneren des gekapselten Gehäuses 18 angeordneten Antriebseinheit in Verbindung stehen.

Die Koppelflansche 21 dienen der Befestigung von jeweils einem Arbeitskopf 22, welcher damit vom Linearantrieb im Inneren des gekapselten Gehäuses 18 in Querrichtung bezogen auf das Teigband verfahrbar ist.

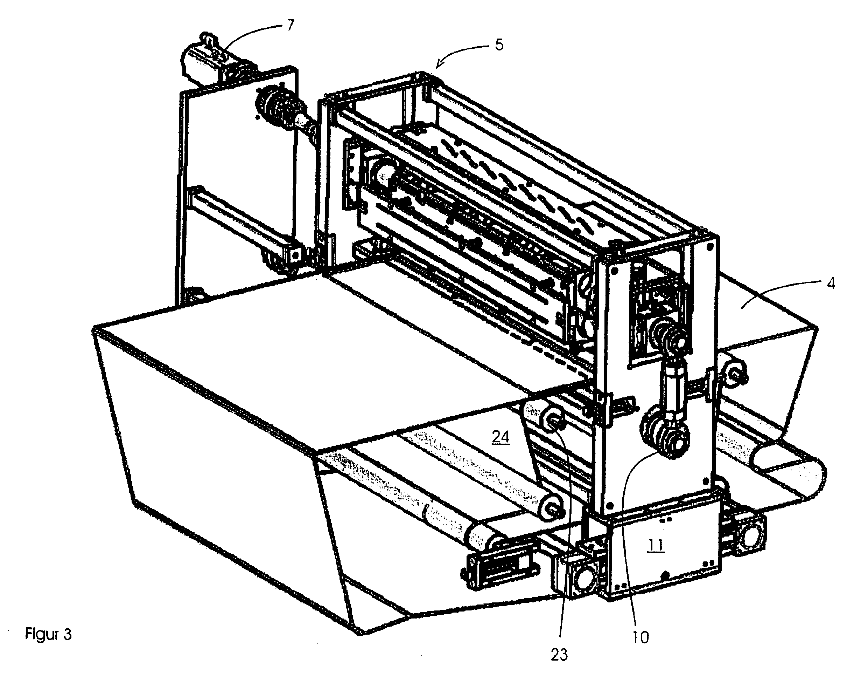

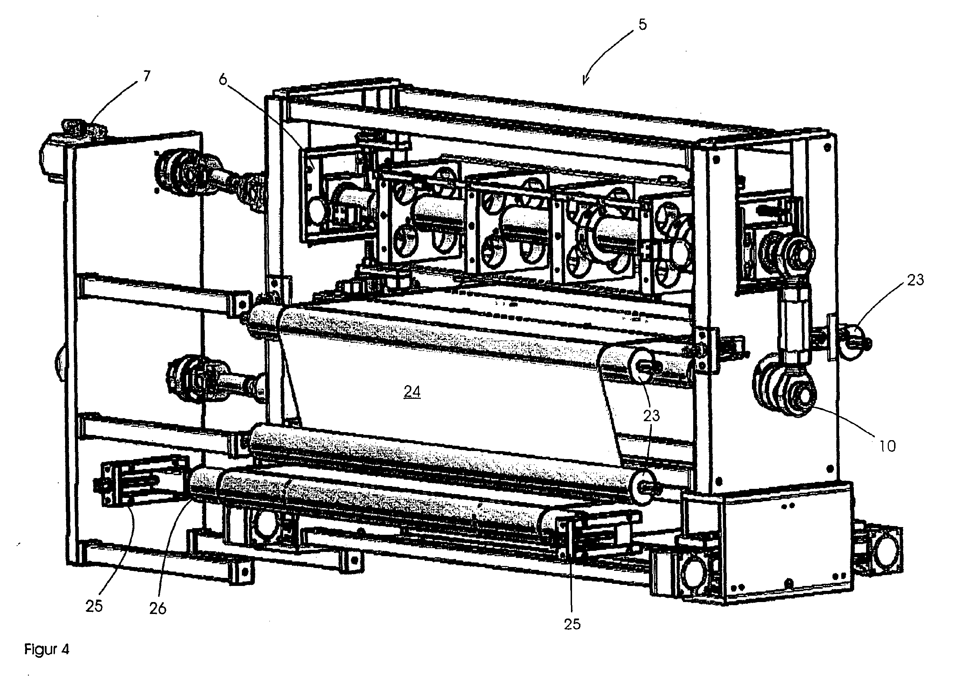

Mindestens im Abschnitt unterhalb der Schneideinheit 5 bzw. unterhalb des Werkzeugbalkens 6 (siehe Fig. 3 bis 5) befindet sich unterhalb des Transportbands 4, welches das Teigband bzw. die Teiglinge trägt, ein über Rollen 23 geführtes Unterband 24, das als Endlosband ausgeführt ist.

Wie insbesondere aus der Fig. 5 ersichtlich, ist das Endlosband 24 mindestens teilweise mit der Unterseite des Transportbands 4 in Kontakt stehend und wird hierdurch bei Bewegung des Transportbands 4 ohne eigenen Antrieb mitgeschleppt.

Es bildet demnach das Unterband bzw. Endlosband 24 eine Schneidunterlage. Die Bewegung des Unterbands / Endlosbands 24 stellt sicher, dass beim Schneiden immer andere Abschnitte des Bandes mittelbar mit dem jeweiligen Schneidwerkzeug 12 in Kontakt gelangen, so dass der Schneidvorgang selbst in optimaler Weise mit geringem Verschleiß der Schneidwerkzeuge ausgeführt werden kann.

Das Unterband / Endlosband 24 kann über Spanneinrichtungen 25 in Verbindung mit einer Spannwalze 26 auf die notwendige Vorspannung justiert werden.

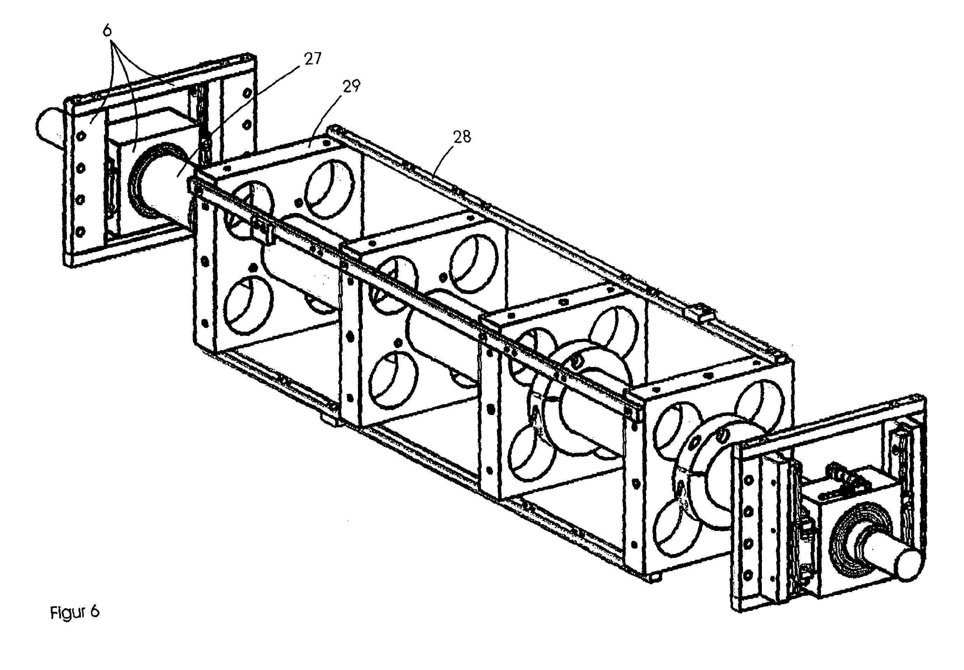

Der Werkzeugbalken 6 gemäß der Darstellung nach Fig. 6 und 7 besitzt eine rahmenartige Konstruktion mit in Längsrichtung im Inneren verlaufender Drehachse 27. Rahmenstreben 28 dienen in Verbindung mit beabstandet vorgesehenen Tragplatten 29 der Befestigung der Messerbalken 8 (Fig. 7), die dann wiederum leicht auswechselbare Messerplatten 9 mit Schneidwerkzeugen 12 aufnehmen. Die Messerplatten 9 können mit dem zugehörigen Messerbalken 8 jeweils eine Baueinheit bilden.

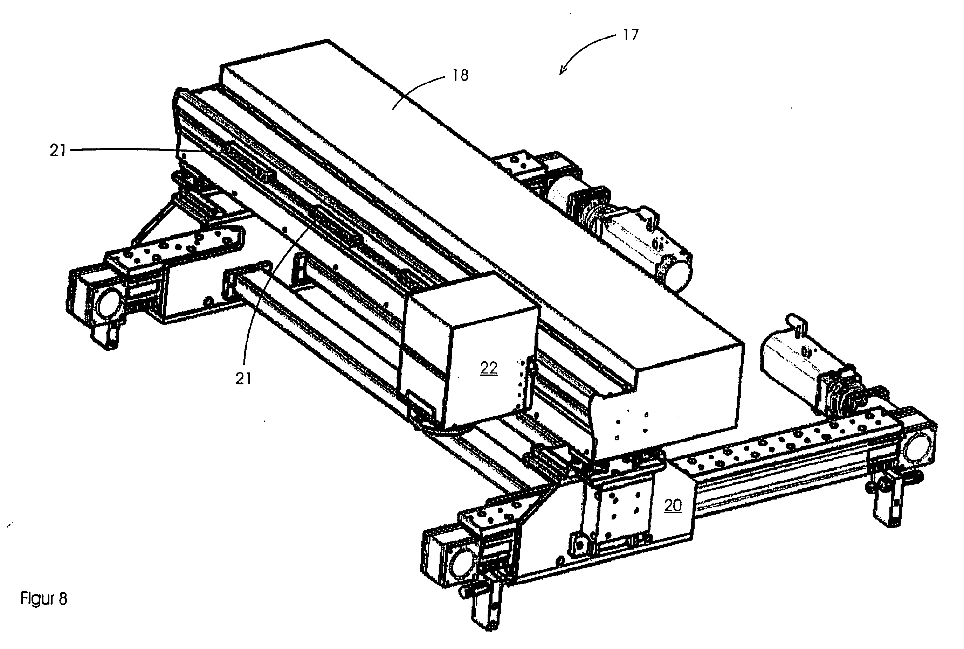

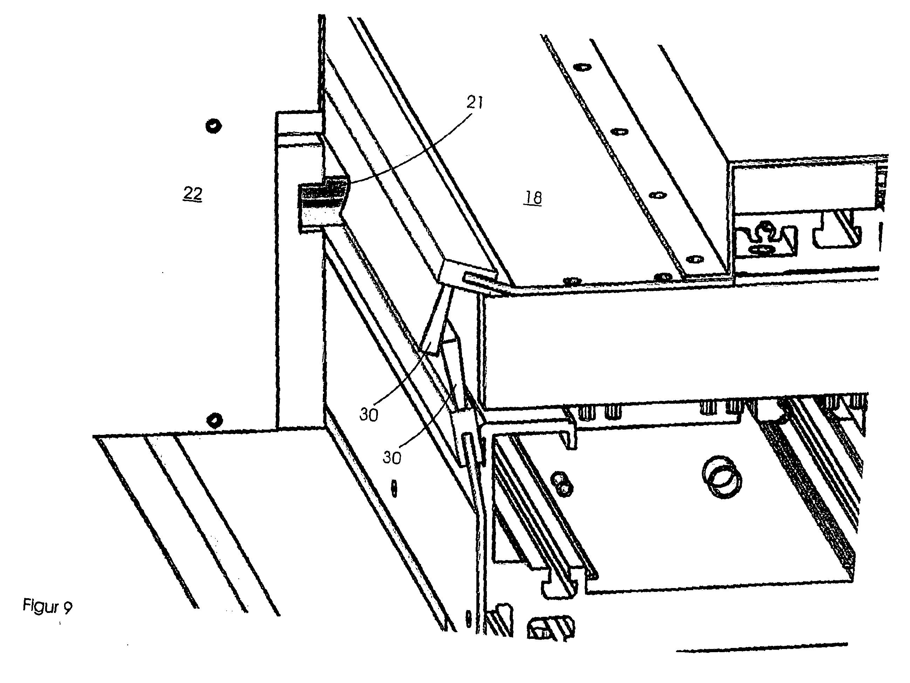

Wie aus den Darstellungen nach den Fig. 8 und 9 ersichtlich wird, ist zur Kapselung des Gehäuses 18 des Querrichtungs-Linearantriebs der Dreh-Spreiz-Einrichtung 17 eine Anordnung teilweise überlappender Bürstenstreifen 30 vorhanden. Die jeweiligen Koppelflansche 21 durchdringen die Bürstenstreifen 30 bei ihrer Verschiebebewegung und es bleibt die gewünschte Dichtheit erhalten, so dass die Gefahr des Eindringens von Mehlstaub oder sonstigen Verschmutzungen in das Innere des Gehäuses 18 reduziert wird. Um die gewünschte teilweise Überlappung der Bürstenstreifen 30 in eine Richtung quer zur Verschiebebewegung der Koppelflansche 21 zu gewährleisten, stehen die beiden Bürstenstreifen 30 nach Fig. 9 unter einem Winkel zueinander, und zwar derart, dass sich die Bürsteninnenseite des oberen Streifens mit der Bürstenaußenseite des unteren Streifens 30 nach Fig. 9 berühren.

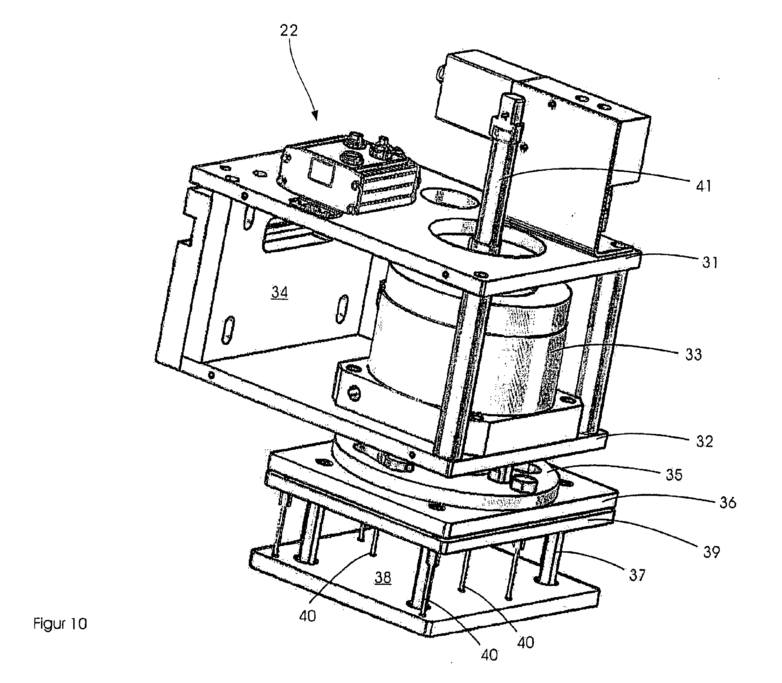

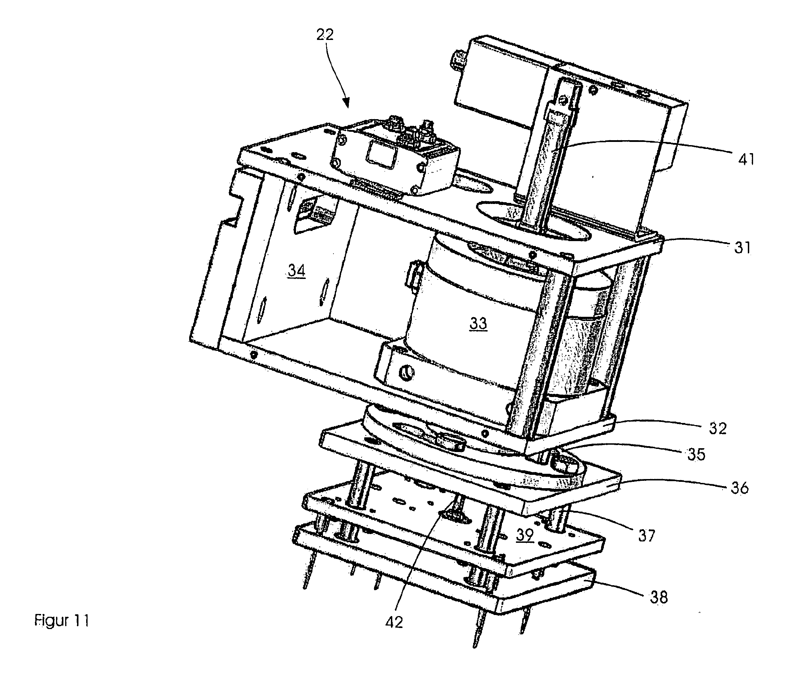

Unter Zuhilfenahme der Fig. 10 und 11 soll nun der Aufbau innerhalb des oder der Arbeitsköpfe 22 näher erläutert werden.

So nimmt eine Tragkonstruktion aus zwei beabstandeten Platten 31 und 32 einen Drehantrieb 33 mit hohlzylindrischer Drehantriebsachse auf.

Die beiden beabstandeten Platten 31 und 32 stehen mit einer Befestigungsplatte 34 in Verbindung, die eine Aufnahme für den Koppelflansch 21 besitzt.

Am Flansch 35 des Drehantriebs 33 befindet sich eine Aufnahmeplatte 36. Die Aufnahmeplatte 36 ist bevorzugt durch Verschraubung mit dem Flansch 35 verbunden.

An der Aufnahmeplatte 36 sind mehrere beabstandete Bolzen 37 vorgesehen, die der beabstandeten Fixierung einer Abstreiferplatte 38 und gleichzeitig der Führung einer Nadelplatte 39 dienen.

An der Nadelplatte 39 ist eine Gruppe von Nadeln 40 fixiert, wobei der Anordnung der Nadeln 40 auf der Nadelplatte 39 entsprechende Durchtrittsöffnungen in der Abstreiferplatte 38 vorgesehen sind.

Wenn, wie in Fig. 11 gezeigt, die Nadeln sich in einer unteren Position durch entsprechende Bewegung der Nadelplatte 39 befinden, durchdringen die freien Enden der Nadeln 40 die Abstreiferplatte 38 und sind in der Lage, einen darunter befindlichen Teigling (nicht gezeigt) aufzunehmen. Dieser aufgenommene Teigling kann dann unter Nutzung des Antriebs 33 einer Drehbewegung und/oder einer Verschiebung unterworfen werden, wenn zusätzlich der Querrichtungs-Linearantrieb der Dreh-Spreiz-Einrichtung aktiviert wird.

Zum Anheben und Absenken der Nadelplatte 39 ist zur Minimierung des erforderlichen Bauraums im hohlzylindrischen Drehantrieb 33 ein Hubzylinder 41 angeordnet, dessen Zylinderstange 42 mit der Nadelplatte 39 in mechanischer Verbindung steht.

Die Baueinheit aus Aufnahmeplatte 36, Nadelplatte 39 und Abstreiferplatte 38 kann insgesamt vom Flansch 35 gelöst und leicht ausgewechselt werden.

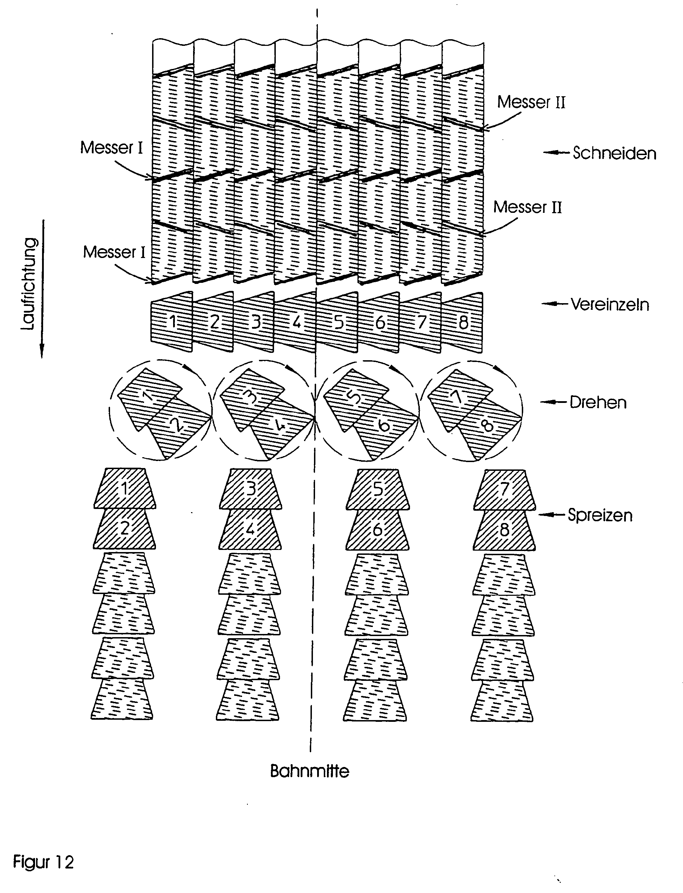

Die Darstellung nach Fig. 12 ist eine prinzipielle Draufsicht auf ein bereits längsgeschnittenes Teigband.

Durch eine Messergruppe I sowie eine Messergruppe II, die sich auf einer jeweiligen Messerplatte befinden, erfolgt der Querschneidvorgang.

Durch das erfindungsgemäße Bewegen der in der Schneidposition befindlichen Schneideinheit mit Werkzeugbalken in Durchlaufrichtung des Teigbands um einen vorgegebenen Betrag können die Teiglinge vereinzelt werden.

Mit Hilfe der Dreh-Spreiz-Einrichtung erfolgt dann der Schritt der Positionsveränderung (Drehen) mit anschließendem Spreizen der Teiglinge. Die in der Fig. 12 gezeigte Teiglingsform führt dann im Endprodukt nach Wickeln, Garen und Ausbacken zu einer sogenannten Kornstange.

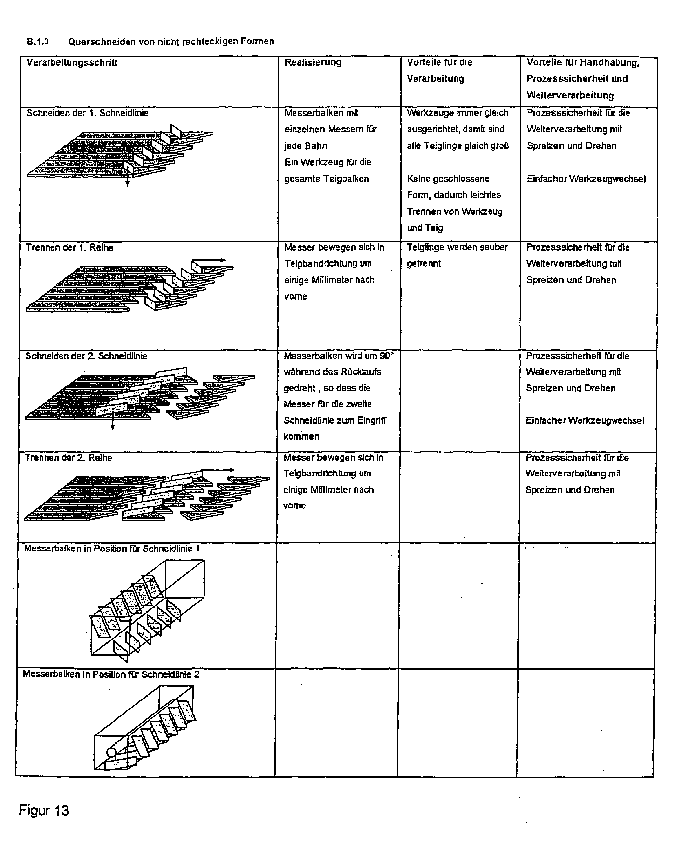

Der Querschneidvorgang einer derartigen nicht rechteckigen Teiglingform ist unter Rückgriff auf die tabellarischen Erläuterungen nebst zugehörigen skizzenhaften Darstellungen in der Fig. 13 nochmals zusammengefasst.

### Bezugszeichenliste

- 1: Gestell
- 2,3: Messer
- 4: Transportband
- 5: Schneideinheit
- 6: Werkzeugbalken
- 7: Drehantrieb
- 8: Messerbalken
- 9: Messerplatte
- 10: Hubantrieb
- 11: Linearantrieb für Schneideinheit
- 12: Schneidwerkzeug
- 13: Drehantrieb (Hub)
- 14: Getriebe
- 15: Exzenter
- 16: Koppelstange
- 17: Dreh-Spreiz-Einrichtung
- 18: gekapseltes Gehäuse
- 20: Linearführung
- 21: Koppelflansch
- 22: Arbeitskopf
- 23: Rolle
- 24: Unterband / Endlosband
- 25: Spanneinrichtung
- 26: Spannwalze
- 27: Drehachse
- 28: Rahmenstrebe
- 29: Tragplatte
- 30: Bürstenstreifen
- 31, 32: Platte
- 33: Drehantrieb
- 34: Befestigungsplatte
- 35: Flansch
- 36: Aufnahmeplatte
- 37: Bolzen
- 38: Abstreiferplatte
- 39: Nadelplatte
- 40: Nadel
- 41: Hubzylinder
- 42: Zylinderstange

## Patentansprüche

1. Vorrichtung zum Schneiden und Separieren von Teiglingen aus einem kontinuierlich oder getaktet geführten Teigband, umfassend ein Transportband (4) und eine Schneideinheit (5) mit einen Werkzeugbalken (6) mit einer Mehrzahl von messerartigen Schneidwerkzeugen (12), welche mittels Hubantrieb (10) zur Ausführung von Schneidbewegungen auf das auf dem Transportband (4) befindliche Teigband zuführbar und von diesem entfernbar sind, **gekennzeichnet durch**
eine bezogen auf die Transport- und Teigband-Bewegungsrichtung vorgesehene Längsführung des Werkzeugbalkens mit Linearantrieb (11), um in einer Schneidposition des Werkzeugbalkens (6) ein Separieren der geschnittenen, senkrecht zur Transport- und Teigband-Bewegungsrichtung verlaufenden Reihe vom Teigband zu bewirken, wobei hierfür die Schneideinheit (5) mit dem Werkzeugbalken (6) in der Transport- und Teigband-Bewegungsrichtung um einen vorgegebenen Betrag unter Mitnahme der geschnittenen Teiglingreihe verfahren wird, sowie mit einem Drehantrieb (7) zum Revolvieren des Werkzeugbalkens (6), wobei der Werkzeugbalken mehrere Messerplatten (9) aufweist, auf denen jeweils unterschiedliche Schneidwerkzeuge (12) oder Schneidwerkzeug-Kombinationen befestigbar sind.

2. Vorrichtung nach Anspruch 1, **dadurch gekennzeichnet, dass** der Werkzeugbalken (6) einen vieleckigen Querschnitt aufweist, wobei auf jeder der Seitenflächen eine Messerplatte (9) austauschbar angeordnet ist, wobei der Revolverantrieb mit einer in Längsrichtung des Werkzeugbalkens (6) in seinem Inneren verlaufenden Drehachse (27) des Werkzeugbalkens (6) in Wirkverbindung steht.

3. Vorrichtung nach Anspruch 1 oder 2, **dadurch gekennzeichnet, dass** in Transport- und Teigband-Bewegungsrichtung der Schneideinheit (5) nachgeordnet mindestens eine quer zur Transport- und Teigband-Bewegungsrichtung verschiebliche Dreh-Spreiz-Einrichtung (17) vorgesehen ist.

4. Vorrichtung nach Anspruch 3, **dadurch gekennzeichnet, dass** die Dreh-Spreiz-Einrichtung (17) mindestens einen Arbeitskopf (22) umfasst, welcher von einem Linearantrieb in Querrichtung bezogen auf die Transport-und Teigband-Bewegungsrichtung verfahrbar ist,
der Arbeitskopf (22) einen Drehantrieb (33) aufnimmt, dessen hohlzylindrische Drehantriebsachse mit einer Aufnahmeplatte (36) in Verbindung steht, an der Bolzen (37) angeordnet sind, um eine im Wesentlichen senkrecht zur Transport- und Teigband-Bewegungsrichtung bewegliche Nadelplatte (39) zum Fixieren der Teiglinge zu führen, wobei an den Bolzenenden eine Abstreiferplatte (38) befestigt ist, welche der Anordnung von Nadeln (40) auf der Nadelplatte (39) entsprechende Durchtrittsöffnungen aufweist, wobei weiterhin in der hohlzylindrischen Drehantriebsachse ein Hubzylinder (41) angeordnet ist, dessen Zylinderstange (42) mit der Nadelplatte (39) in Verbindung steht.

5. Vorrichtung nach Anspruch 4, **dadurch gekennzeichnet, dass** die Baueinheit aus Aufnahmeplatte (36), Nadelplatte (39) und Abstreiferplatte (38) vom Drehantrieb (33) und Hubzylinder (41) lösbar ist.

6. Vorrichtung nach einem der Ansprüche 3 bis 5, **dadurch gekennzeichnet, dass** die Dreh-Spreiz-Einrichtung (17) auf einer zusätzlichen, in der Transport- und Teigband-Bewegungsrichtung verlaufenden Linearführung (20) angeordnet ist, um diese Einrichtung (17) aus einer dem Werkzeugbalken (6) nahen Arbeitsposition in eine balkenferne Wartungsposition zu bewegen.

7. Vorrichtung nach einem der Ansprüche 3 bis 6, **dadurch gekennzeichnet, dass** sowohl der Arbeitskopf (22) als auch der Linearantrieb in Querrichtung staubdicht gekapselt sind.

8. Vorrichtung nach Anspruch 7, **dadurch gekennzeichnet, dass** zur Kapselung des Querrichtungs-Linearantriebs der Dreh-Spreiz-Einrichtung (17) sich teilweise überlappende Bürstenstreifen (30) vorgesehen sind, welche einen Durchtrittsspalt verschließen, wobei im Bereich des Durchtrittsspalts mindestens ein Koppelflansch (21) befindlich ist, welcher den jeweiligen Arbeitskopf (22) trägt und wobei der Koppelflansch (21) mit dem Querrichtungs-Linearantrieb in Verbindung steht.

9. Vorrichtung nach einem der vorangegangenen Ansprüche, **dadurch gekennzeichnet, dass** mindestens im Abschnitt der mittels des Werkzeugbalkens (6) mit einer der Messerplatten (9) auszuführenden Schneidbewegungen unterhalb des Transportbands (4), welches das Teigband bzw. die Teiglinge trägt, ein geführtes, umlaufendes Endlosband (24) als Schneidunterlage angeordnet ist.

10. Vorrichtung nach Anspruch 9, **dadurch gekennzeichnet, dass** das Endlosband (24) teilweise mit der Unterseite des Transportbands (4) in Kontakt steht und bei Bewegung des Transportbands (4) mit diesem mitgeschleppt wird.
